# FASCICULE DE BREVET EUROPEEN

(11) **EP 3 540 203 B1**
(45) Date de publication et mention de la délivrance du brevet: **23.12.2020**
(21) Numéro de dépôt: 19158891.2
(22) Date de dépôt: 22.02.2019
(51) Int. Cl.: F02K 1/72

(54) **TURBORÉACTEUR DOUBLE FLUX COMPORTANT UNE SÉRIE DE LAMES ROTATIVES POUR OBTURER LA VEINE DU FLUX SECONDAIRE**
DOPPELSTROM-TURBOTRIEBWERK, DAS EINE REIHE VON VERSCHWENKBAREN LAMELLEN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 13.03.2018 FR 1852166
(43) Date de publication de la demande: 18.09.2019
(73) Titulaire: Airbus Operations S.A.S., 31060 Toulouse (FR)
(72) Inventeur: RIDRAY, Frédéric, 32600 L'ISLE JOURDAIN (FR); PIARD, Frédéric, 31170 TOURNEFEUILLE (FR); GARDES, Pascal, 31530 LEVIGNAC (FR)
(74) Mandataire: Gicquel, Olivier Yves Gérard

(56) Documents cités:
- DE-A1- 1 937 679
- DE-A1-102013 225 045
- US-A- 2 933 890

## Description

La présente invention concerne un turboréacteur double flux qui comporte une série de lames qui sont montées rotatives pour obturer la veine du flux secondaire, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Bien que les portes d'inversion donnent entière satisfaction, il est souhaitable de trouver des mécanismes différents, en particulier des mécanismes moins lourds.

On connait par le brevet US2933890, un turboréacteur simple flux qui comporte une série de lames qui sont montées rotatives pour obturer la veine par lequel le flux d'air est normalement éjecté vers l'arrière du turboréacteur. L'obturation de la veine permet de dévier l'unique flux d'air vers l'avant du turboréacteur afin de ralentir l'aéronef une fois posé au sol.

Le mécanisme décrit dans le brevet susmentionné fonctionne à la manière d'un iris et pourrait, si adapté à un turboréacteur double flux, permettre une réduction de masse en remplaçant les portes d'inversion et leurs mécanismes d'entraînement par des lames pivotantes plus légères.

L'invention propose une adaptation d'un mécanisme d'inverseur de poussée de type iris à un turboréacteur double flux. A cet effet, est proposé un turboréacteur double flux tel que revendiqué dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective du turboréacteur double flux selon l'invention en position avancée et escamotée,
la Fig. 3 est une vue en perspective du turboréacteur double flux selon l'invention en position reculée et escamotée,
la Fig. 4 est une vue de face et en coupe du turboréacteur double flux selon l'invention au niveau du plan IV de la Fig. 3, en position reculée et déployée à droite et escamotée à gauche,
la Fig. 5 est une représentation schématique d'un turboréacteur double flux selon l'invention vu en coupe par un plan vertical,
la Fig. 6 est une vue en perspective d'un détail de réalisation du système de pivot des lames, et
la Fig. 7 et la Fig. 8 montrent des vues en perspective d'un système de manœuvre des lames selon un mode de réalisation particulier de l'invention.

Dans la description qui suit, les termes relatifs à une position sont pris en référence au sens d'écoulement de l'air dans un turboréacteur qui s'écoule donc de l'avant vers l'arrière de l'aéronef.

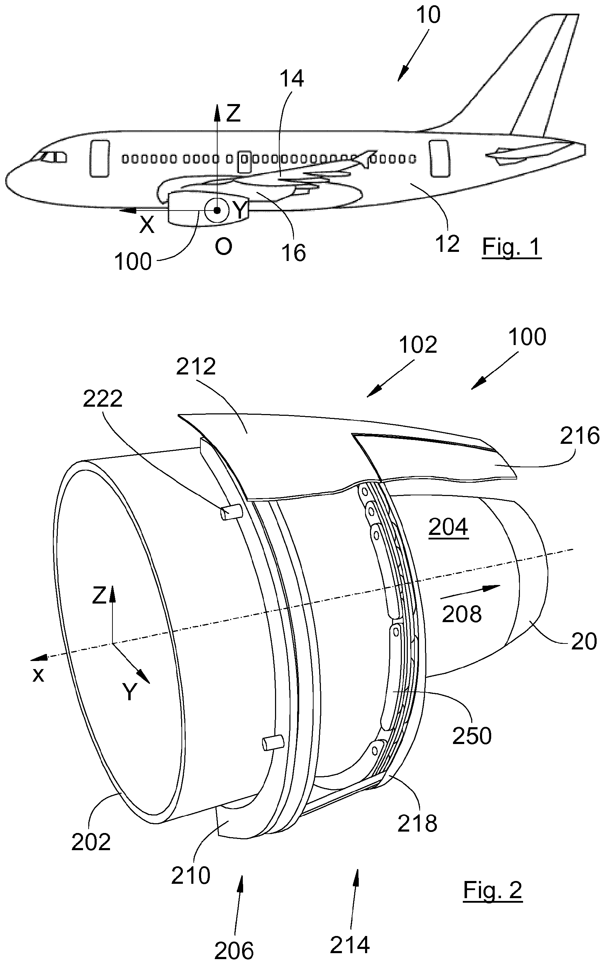

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

La Fig. 2 montre le turboréacteur double flux 100 qui présente une nacelle 102 et un moteur 20 qui est logé à l'intérieur de la nacelle 102 et qui comporte un carter de soufflante 202. Le moteur 20 est matérialisé sur la Fig. 2 par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

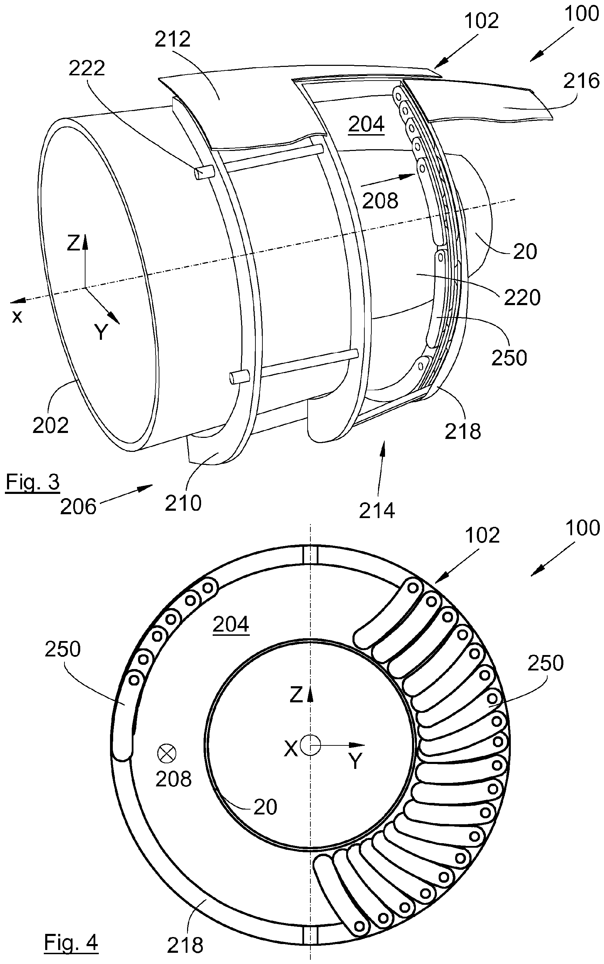

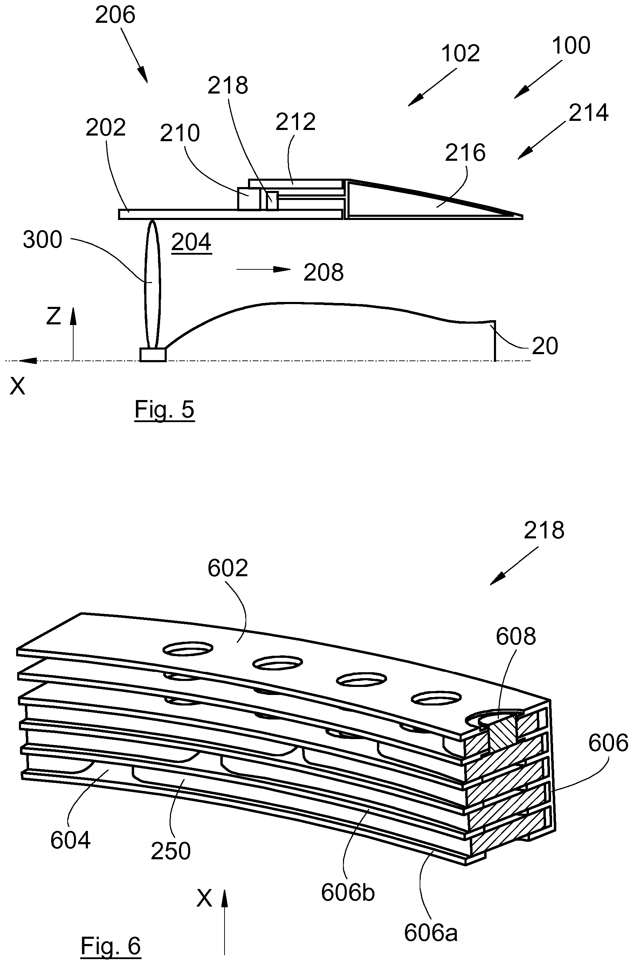

La Fig. 3 et la Fig. 4 montrent le turboréacteur double flux 100 dans différentes positions d'utilisation et la Fig. 5 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier d'un cadre avant 210 monté autour du carter de soufflante 202 et de panneaux extérieurs 212 dont une partie est découpée sur les Figs. 2 et 3.

La nacelle 102 présente un ensemble mobile 214 qui présente un capot mobile 216 (dont une partie découpée est représentée en Fig. 2) formant les parois de la tuyère et un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (Fig. 2) et une position reculée (Figs. 3 et 4) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux une fenêtre 220 ouverte entre la veine 204 et l'extérieur de la nacelle 102. C'est-à-dire que l'air provenant du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre le cadre avant 210 et le coulisseau 218.

La nacelle 102 comporte également un ensemble d'actionneurs 222 assurant le déplacement en translation du coulisseau 218 entre la position avancée et la position reculée et inversement. Chaque actionneur 222 est commandé par une unité de contrôle, par exemple du type processeur, qui commande les déplacements dans un sens ou dans l'autre selon les besoins de l'aéronef 10.

Chaque actionneur 222 peut prendre par exemple la forme d'un vérin à double effet (deux directions de travail) dont le cylindre est fixé au cadre avant 210 et plus généralement à la structure fixe 206 de la nacelle 102, et une tige fixée au coulisseau 218.

Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation globalement parallèle à l'axe longitudinal X. Chaque lame 250 est ainsi mobile entre une position escamotée (Figs. 2 et 3 et Fig. 4 à gauche) dans laquelle la lame 250 est en dehors de la veine 204 et une position déployée (Fig. 4 à droite) dans laquelle la lame 250 est en travers de la veine 204 afin de dévier le flux secondaire 208 vers la fenêtre 220.

Chaque lame 250 s'étend dans un plan perpendiculaire à l'axe longitudinal X.

Chaque lame 250 est montée sur le pourtour du coulisseau 218. Lorsque les lames 250 sont en position escamotée, elles se superposent selon l'axe longitudinal X, par groupe les unes au-dessus des autres de manière à s'aligner sous une forme circulaire comme représenté sur la Fig. 4 à gauche où seules quelques lames 250 ont été représentées.

Dans le mode de réalisation de l'invention, chaque lame 250 prend la forme d'un haricot mais il est possible d'envisager des formes différentes.

Le nombre de lames 250 ainsi que la forme de chacune d'elles dépend des dimensions du turboréacteur double flux 100 ainsi que de la largeur de chaque lame 250 afin qu'en position déployée, les lames 250 obturent la plus grande partie de la veine 204.

Chaque lame 250 est montée mobile au niveau d'une première extrémité tandis qu'une deuxième extrémité se rapproche du moteur 20 lorsque la lame 250 est déployée afin d'obturer au mieux la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre qui est destiné à déplacer chaque lame 250 de la position escamotée à la position déployée et inversement. Le système de manœuvre est commandé par l'unité de contrôle. Le système de manœuvre peut être par exemple un système motorisé de pignon et crémaillère tel que décrit ci-dessous ou tout autre système mécanique approprié.

Le fonctionnement consiste ainsi, à partir de la position avancée/escamotée, à commander l'activation des actionneurs 222 pour déplacer le coulisseau 218 de la position avancée à la position reculée, puis à commander le système de manœuvre afin de déplacer les lames 250 de la position escamotée à la position déployée.

A l'inverse, le fonctionnement consiste ainsi, à partir de la position reculée/déployée, à commander le système de manœuvre afin de déplacer les lames 250 de la position déployée à la position escamotée, puis à commander l'activation des actionneurs 222 pour déplacer le coulisseau 218 de la position reculée à la position avancée.

L'utilisation de lames 250 montées rotatives sur le coulisseau 218 permet un allégement de l'ensemble par rapport à l'utilisation de portes d'inversion de l'état de la technique.

La Fig. 6 montre un mode de réalisation particulier des liaisons pivot entre les lames 250 et le coulisseau 218.

Comme cela est représenté sur la Fig. 2, l'ensemble de lames 250 comporte un premier étage, le plus en aval par rapport au sens d'écoulement, où les lames 250 se positionnent dans le même plan radial XZ, c'est-à-dire perpendiculaire à l'axe longitudinal X, les unes à la suite des autres sur le pourtour du coulisseau 218. Sur l'étage suivant, en amont par rapport à l'étage précédent selon le sens d'écoulement, les lames 250 se positionnent dans un autre plan perpendiculaire à l'axe longitudinal X, et sont décalées angulairement autour de l'axe longitudinal X par rapport aux lames 250 de l'étage précédent, et ainsi de suite jusqu'à couvrir toute la veine 204.

Bien sûr, le nombre d'étages peut varier d'une position à l'autre sur le pourtour du coulisseau 218 et le nombre de lames 250 par étage peut également changer d'un étage à l'autre.

Le décalage angulaire permet de décaler les axes de rotation des lames 250 les unes par rapport aux autres, le long du pourtour du coulisseau 218.

Le coulisseau 218 comporte une cage 602 dont uniquement un secteur est représenté à la Fig. 6.

La cage 602 présente une paroi extérieure 606 qui prend la forme d'un cylindre ou d'une portion de cylindre selon l'étendue angulaire à couvrir et qui constitue la paroi orientée vers l'extérieur de la nacelle 102. La paroi extérieure 606 est concentrique avec l'axe longitudinal X.

Pour chaque étage de lames 250, la cage 602 présente une fente 604 disposée entre une paroi amont 606b et une paroi aval 606a et ouverte vers l'intérieur de la nacelle 102.

Chaque paroi amont 606b et chaque paroi aval 606a est dans un plan perpendiculaire à l'axe longitudinal X et forme une couronne ou une portion de couronne concentrique avec l'axe longitudinal X.

Lorsqu'elles sont en position escamotée, les lames 250 d'un même étage logent dans la fente 604 associée à l'étage.

La liaison pivot autour de laquelle chaque lame 250 est montée pivotante peut prendre différentes formes.

Selon un mode de réalisation particulier, pour chaque lame 250, un arbre 608 solidaire de la lame 250 est monté mobile en rotation au niveau de la première extrémité, entre la paroi amont 606b et la paroi aval 606b de l'étage correspondant à la lame 250 et forme l'axe de rotation de la lame 250.

Selon un autre mode de réalisation, pour chaque lame 250, un arbre 608 est monté fixe entre la paroi amont 606b et la paroi aval 606b de l'étage correspondant à la lame 250, et la lame 250 est montée mobile en rotation autour de l'arbre 608 par un montage ajusté au niveau de la première extrémité. L'arbre 608 forme l'axe de rotation de la lame 250.

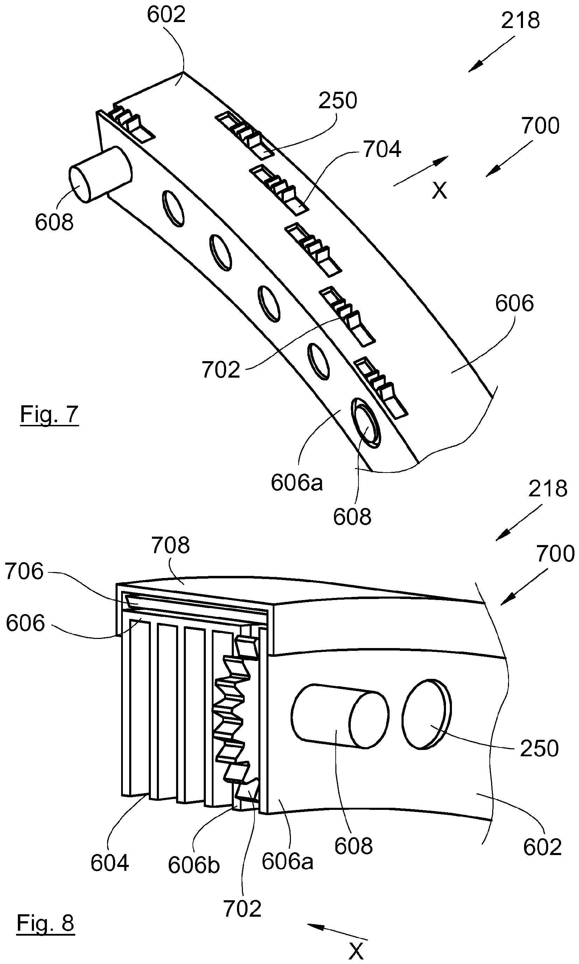

La Fig. 7 et la Fig. 8 montrent un mode de réalisation particulier d'un système de manœuvre 700 mis en œuvre avec la cage 602.

Chaque lame 250 comporte, au niveau de sa première extrémité, un pignon 702 qui est solidaire de la lame 250, qui est concentrique à l'axe de rotation de la lame 250 et dont les dents dépassent de la paroi extérieure 606 à travers une fenêtre 704 que la paroi extérieure 606 présente à cet effet.

Une crémaillère 706 est montée mobile contre la paroi extérieure 606 et présente ses dents vers la paroi extérieure 606 pour engrener avec les dents des pignons 702.

Afin de maintenir la crémaillère 706, un capot 708 est monté contre la paroi extérieure 606 afin de prendre la crémaillère 706 en sandwich entre la paroi extérieure 606 et le capot 708.

Le déplacement de la crémaillère 706 est globalement une rotation autour de l'axe longitudinal X et la crémaillère 706 prend globalement la forme d'un cylindre concentrique avec l'axe longitudinal X.

Le système de manœuvre 700 comporte ainsi, pour chaque lame 250, le pignon 702 et la crémaillère 706.

Afin de déplacer la crémaillère 706 le long de la paroi extérieure 606, le système de manœuvre 700 comporte également un moteur qui est commandé par l'unité de contrôle. Le moteur peut engrener directement avec les dents de la crémaillère 706 à travers un pignon fixé sur son axe moteur, ou son axe moteur peut constituer l'arbre 608 de l'une des lames 250.

Ainsi, selon le cas, la rotation du moteur va entraîner la crémaillère 708 soit directement ou soit à travers l'arbre 608, ce qui va entraîner à la suite la rotation des pignons 702 et donc des lames 250 dans un sens ou dans l'autre.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au et en aval du coulisseau (218) par rapport au sens d'écoulement, le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250), chacune comportant une première extrémité montée mobile en rotation sur le coulisseau (218) autour d'un axe de rotation globalement parallèle à l'axe longitudinal (X), où chaque lame (250) est mobile entre une position escamotée dans laquelle la lame (250) est en dehors de la veine (204) et une position déployée dans laquelle la lame (250) est en travers de la veine (204),
- un ensemble d'actionneurs (222) assurant le déplacement du coulisseau (218) entre la position avancée et la position reculée, et inversement, et
- un système de manœuvre destiné à déplacer chaque lame (250) de la position escamotée à la position déployée et inversement,
**caractérisé en ce que** l'ensemble de lames (250) comporte un premier étage, le plus en aval par rapport au sens d'écoulement, où les lames (250) se positionnent dans un même plan perpendiculaire à l'axe longitudinal (X), les unes à la suite des autres sur le pourtour du coulisseau (218), et **en ce que** sur l'étage suivant, en amont par rapport à l'étage précédent selon le sens d'écoulement, les lames (250) se positionnent dans un autre plan perpendiculaire à l'axe longitudinal (X) et sont décalées angulairement autour de l'axe longitudinal (X) par rapport aux lames (250) de l'étage précédent, et ainsi de suite.

2. Turboréacteur double flux (100) selon la revendication 1, **caractérisé en ce que** la nacelle (102) comporte une cage (602) présentant une paroi extérieure (606) concentrique avec l'axe longitudinal (X) et constituant la paroi orientée vers l'extérieur de la nacelle (102), **en ce que** pour chaque étage de lames (250), la cage (602) présente une fente (604) disposée entre une paroi amont (606b) et une paroi aval (606a), **en ce que** lorsqu'elles sont en position escamotée, les lames (250) d'un même étage logent dans la fente (604) associée à l'étage, et **en ce que** pour chaque lame (250), un arbre (608) solidaire de la lame (250) est monté mobile en rotation au niveau de la première extrémité entre la paroi amont (606b) et la paroi aval (606b) de l'étage correspondant à la lame (250) et forme l'axe de rotation de la lame (250).

3. Turboréacteur double flux (100) selon la revendication 1, **caractérisé en ce que** la nacelle (102) comporte une cage (602) présentant une paroi extérieure (606) concentrique avec l'axe longitudinal (X) et constituant la paroi orientée vers l'extérieur de la nacelle (102), **en ce que** pour chaque étage de lames (250), la cage (602) présente une fente (604) disposée entre une paroi amont (606b) et une paroi aval (606a), **en ce que** lorsqu'elles sont en position escamotée, les lames (250) d'un même étage logent dans la fente (604) associée à l'étage, **en ce que** pour chaque lame (250), un arbre (608) est monté fixe entre la paroi amont (606b) et la paroi aval (606b) de l'étage correspondant à la lame (250), et **en ce que** la lame (250) est montée mobile en rotation autour de l'arbre (608) par un montage ajusté au niveau de la première extrémité.

4. Turboréacteur double flux (100) selon l'une des revendications 2 ou 3, **caractérisé en ce que**, pour chaque lame (250), la paroi extérieure (606) présente une fenêtre (704), **en ce que** le système de manœuvre (700) comporte, pour chaque lame (250), un pignon (702) solidaire de la lame (250) et concentrique à l'axe de rotation de la lame (250) et dont les dents dépassent de la paroi extérieure (606) à travers la fenêtre (704), une crémaillère (706) montée mobile contre la paroi extérieure (606) et présentant ses dents vers la paroi extérieure (606) pour engrener avec les dents des pignons (702), et un moteur destiné à déplacer la crémaillère (706) le long de la paroi extérieure (606).

5. Aéronef (10) comportant au moins un turboréacteur double flux (100) selon l'une des revendications précédentes.

## Patentansprüche

1. Zweistrom-Turbostrahltriebwerk (100), das eine Längsachse (X) aufweist und einen Motor (20) und eine Gondel (102) umfasst, die den Motor (20) umgibt, der ein Gebläsegehäuse (202) umfasst, wobei ein Kanal (204) eines Sekundärstroms (208) zwischen der Gondel (102) und dem Motor (20) begrenzt wird und in dem ein Luftstrom gemäß einer Fließrichtung zirkuliert, wobei die Gondel (102) umfasst:
- eine am Gebläsegehäuse (202) befestigte ortsfeste Struktur (206),
- eine bewegliche Einheit (214), die eine bewegliche Haube (216) und ein Gleitstück (218) aufweist, wobei die bewegliche Haube (216) am und stromabwärts hinter dem Gleitstück (218) bezüglich der Fließrichtung befestigt ist, wobei das Gleitstück (218) auf der ortsfesten Struktur (206) gemäß einer Translationsrichtung zwischen einer vorgeschobenen Stellung, in der das Gleitstück (218) so positioniert ist, dass die bewegliche Haube (216) dem Gebläsegehäuse (202) angenähert ist, und einer zurückgezogenen Stellung translationsbeweglich ist, in der das Gleitstück (218) so positioniert ist, dass die bewegliche Haube (216) vom Gebläsegehäuse (202) entfernt ist, um zwischen ihnen ein offenes Fenster (220) zwischen dem Kanal (204) und der Außenumgebung der Gondel (102) zu definieren,
- eine Vielzahl von Lamellen (250), die je ein erstes Ende umfassen, das auf das Gleitstück (218) um eine Drehachse global parallel zur Längsachse (X) drehbeweglich montiert ist, wobei jede Lamelle (250) zwischen einer eingezogenen Stellung, in der die Lamelle (250) sich außerhalb des Kanals (204) befindet, und einer ausgefahrenen Stellung beweglich ist, in der die Lamelle (250) quer über den Kanal (204) liegt,
- eine Einheit von Stellantrieben (222), die die Verschiebung des Gleitstücks (218) zwischen der vorgeschobenen Stellung und der zurückgezogenen Stellung und umgekehrt gewährleisten, und
- ein Betätigungssystem, das dazu bestimmt ist, jede Lamelle (250) von der eingezogenen Stellung in die ausgefahrene Stellung und umgekehrt zu verschieben,
**dadurch gekennzeichnet, dass** die Einheit von Lamellen (250) eine erste Stufe am weitesten stromabwärts bezüglich der Fließrichtung umfasst, in der die Lamellen (250) sich in einer gleichen Ebene lotrecht zur Längsachse (X) nacheinander auf dem Umfang des Gleitstücks (218) positionieren, und dass in der folgenden Stufe stromaufwärts bezüglich der vorhergehenden Stufe gemäß der Fließrichtung die Lamellen (250) sich in einer anderen Ebene lotrecht zur Längsachse (X) positionieren und winkelmäßig um die Längsachse (X) bezüglich der Lamellen (250) der vorhergehenden Stufe versetzt sind und so weiter.

2. Zweistrom-Turbostrahltriebwerk (100) nach Anspruch 1, **dadurch gekennzeichnet, dass** die Gondel (102) einen Käfig (602) umfasst, der eine mit der Längsachse (X) konzentrische und die zur Außenseite der Gondel (102) gerichtete Wand bildende Außenwand (606) aufweist, dass für jede Stufe von Lamellen (250) der Käfig (602) einen Schlitz (604) aufweist, der zwischen einer stromaufwärtigen Wand (606b) und einer stromabwärtigen Wand (606a) angeordnet ist, dass die Lamellen (250) einer gleichen Stufe, wenn sie in der eingezogenen Stellung sind, in dem der Stufe zugeordneten Schlitz (604) untergebracht sind, und dass für jede Lamelle (250) eine fest mit der Lamelle (250) verbundene Welle (608) im Bereich des ersten Endes zwischen der stromaufwärtigen Wand (606b) und der stromabwärtigen Wand (606b) der der Lamelle (250) entsprechenden Stufe drehbeweglich montiert ist und die Drehachse der Lamelle (250) bildet.

3. Zweistrom-Turbostrahltriebwerk (100) nach Anspruch 1, **dadurch gekennzeichnet, dass** die Gondel (102) einen Käfig (602) umfasst, der eine mit der Längsachse (X) konzentrische und die zur Außenseite der Gondel (102) gerichtete Wand bildende Außenwand (606) aufweist, dass für jede Stufe von Lamellen (250) der Käfig (602) einen Schlitz (604) aufweist, der zwischen einer stromaufwärtigen Wand (606b) und einer stromabwärtigen Wand (606a) angeordnet ist, dass die Lamellen (250) einer gleichen Stufe, wenn sie in der eingezogenen Stellung sind, in dem der Stufe zugeordneten Schlitz (604) untergebracht sind, dass für jede Lamelle (250) eine Welle (608) zwischen der stromaufwärtigen Wand (606b) und der stromabwärtigen Wand (606b) der der Lamelle (250) entsprechenden Stufe ortsfest montiert ist, und dass die Lamelle (250) durch eine angepasste Montage im Bereich des ersten Endes drehbeweglich um die Welle (608) montiert ist.

4. Zweistrom-Turbostrahltriebwerk (100) nach einem der Ansprüche 2 oder 3, **dadurch gekennzeichnet, dass** für jede Lamelle (250) die Außenwand (606) ein Fenster (704) aufweist, dass das Betätigungssystem (700) für jede Lamelle (250) ein Ritzel (702), das fest mit der Lamelle (250) verbunden und konzentrisch zur Drehachse der Lamelle (250) ist und dessen Zähne über die Außenwand (606) durch das Fenster (704) hindurch überstehen, eine Zahnstange (706), die beweglich gegen die Außenwand (606) montiert ist und ihre Zähne zur Außenwand (606) hin präsentiert, um in die Zähne der Ritzel (702) einzugreifen, und einen Motor umfasst, der dazu bestimmt ist, die Zahnstange (706) entlang der Außenwand (606) zu verschieben.

5. Luftfahrzeug (10), das mindestens ein Zweistrom-Turbostrahltriebwerk (100) nach einem der vorhergehenden Ansprüche umfasst.

## Claims

1. Turbofan (100) having a longitudinal axis (X) and comprising a motor (20) and a nacelle (102), surrounding the motor (20), which comprises a fan casing (202), wherein a duct (204) for a bypass flow (208) is delimited between the nacelle (102) and the motor (20) and in which a flow of air flows in a direction of flow, said nacelle (102) comprising:
- a fixed structure (206) fixed to the fan casing (202),
- a movable assembly (214) having a movable cowl (216) and a slider (218), the movable cowl (216) being fixed to and downstream of the slider (218) with respect to the direction of flow, the slider (218) being movable in translation on the fixed structure (206) in a direction of translation between an advanced position, in which the slider (218) is positioned such that the movable cowl (216) is close to the fan casing (202), and a retracted position, in which the slider (218) is positioned such that the movable cowl (216) is away from the fan casing (202) so as to define, therebetween, an open window (220) between the duct (204) and the exterior of the nacelle (102),
- a plurality of blades (250), each one comprising a first end mounted on the slider (218) so as to be rotatable about an axis of rotation generally parallel to the longitudinal axis (X), wherein each blade (250) is movable between a stowed position, in which the blade (250) is outside the duct (204), and a deployed position, in which the blade (250) is across the duct (204),
- a set of actuators (222) causing the slider (218) to move between the advanced position and the retracted position, and vice versa, and
- a manoeuvring system intended to move each blade (250) from the stowed position to the deployed position, and vice versa,
**characterized in that** the set of blades (250) comprises a first stage, which is furthest downstream with respect to the direction of flow, wherein the blades (250) are positioned in one and the same plane perpendicular to the longitudinal axis (X), one after another around the perimeter of the slider (218), and **in that**, in the following stage, which is upstream with respect to the preceding stage in the direction of flow, the blades (250) are positioned in another plane perpendicular to the longitudinal axis (X) and are angularly offset about the longitudinal axis (X) with respect to the blades (250) of the preceding stage, and so on.

2. Turbofan (100) according to Claim 1, **characterized in that** the nacelle (102) comprises a cage (602) having an outer wall (606) concentric with the longitudinal axis (X) and constituting the wall oriented towards the outside of the nacelle (102), **in that**, for each stage of blades (250), the cage (602) has a slot (604) disposed between an upstream wall (606b) and a downstream wall (606a), **in that**, when they are in the stowed position, the blades (250) of one and the same stage are accommodated in the slot (604) associated with the stage, and **in that**, for each blade (250), a shaft (608) secured to the blade (250) is mounted in a rotatable manner at the first end between the upstream wall (606b) and the downstream wall (606b) of the stage corresponding to the blade (250) and forms the axis of rotation of the blade (250) .

3. Turbofan (100) according to Claim 1, **characterized in that** the nacelle (102) comprises a cage (602) having an outer wall (606) concentric with the longitudinal axis (X) and constituting the wall oriented towards the outside of the nacelle (102), **in that**, for each stage of blades (250), the cage (602) has a slot (604) disposed between an upstream wall (606b) and a downstream wall (606a), **in that**, when they are in the stowed position, the blades (250) of one and the same stage are accommodated in the slot (604) associated with the stage, **in that**, for each blade (250), a shaft (608) is mounted fixed between the upstream wall (606b) and the downstream wall (606b) of the stage corresponding to the blade (250), and **in that** the blade (250) is mounted so as to be rotatable about the shaft (608) by way of a close fit at the first end.

4. Turbofan (100) according to either of Claims 2 and 3, **characterized in that**, for each blade (250), the outer wall (606) has a window (704), **in that** the manoeuvring system (700) comprises, for each blade (250), a pinion (702) which is secured to the blade (250) and concentric with the axis of rotation of the blade (250) and the teeth of which protrude from the outer wall (606) through the window (704), a rack (706) that is mounted in a movable manner against the outer wall (606) and has its teeth towards the outer wall (606) in order to mesh with the teeth of the pinions (702), and a motor intended to move the rack (706) along the outer wall (606).

5. Aircraft (10) comprising at least one turbofan (100) according to one of the preceding claims.
